(19) Europäisches Patentamt
European Patent Office
Office européen des brevets

(11) Veröffentlichungsnummer: **0 090 386**
**B1**

(12) # EUROPÄISCHE PATENTSCHRIFT

(45) Veröffentlichungstag der Patentschrift: **16.10.85**

(51) Int. Cl.⁴: **C 09 J 3/14**, C 08 F 8/12, C 08 F 218/00

(21) Anmeldenummer: **83103023.4**

(22) Anmeldetag: **26.03.83**

(54) **Verfahren zur Herstellung eines Schmelzklebstoffs auf Basis von Polyvinylalkohol.**

(30) Priorität: **31.03.82 DE 3211915**

(43) Veröffentlichungstag der Anmeldung:
**05.10.83 Patentblatt 83/40**

(45) Bekanntmachung des Hinweises auf die Patenterteilung:
**16.10.85 Patentblatt 85/42**

(84) Benannte Vertragsstaaten:
**AT BE CH DE FR GB IT LI LU NL SE**

(56) Entgegenhaltungen:
**DE - B - 1 229 729**
**FR - A - 2 299 388**
**FR - A - 2 333 005**

(73) Patentinhaber: **HOECHST AKTIENGESELLSCHAFT, Postfach 80 03 20, D-6230 Frankfurt am Main 80 (DE)**

(72) Erfinder: **Pospich, Günther, Albert-Blank-Strasse 6, D-6230 Frankfurt am Main 80 (DE)**
Erfinder: **Gutte, Richard, Heimchenweg 52, D-6230 Frankfurt am Main 80 (DE)**

**EP 0 090 386 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf ein Verfahren zur Herstellung eines Schmelzklebstoffs auf Basis von Polyvinylalkohol durch Alkoholyse eines Vinylester-Polymers in Gegenwart eines basischen Katalysators und den nach diesem Verfahren erhaltenen Schmelzklebstoff.

Es ist bekannt, dass Polyvinylalkohol (PVAL) als solcher nicht unzersetzt schmelzbar ist. Für die thermoplastische Verarbeitung ist es daher erforderlich, den Erweichungsbereich des PVAL herabzusetzen. Dies geschieht üblicherweise durch Einarbeitung von Weichmachern. So ist beispielsweise die Plastifizierung von teilweise hydrolysiertem PVAL, dessen Hydrolysegrad 75 bis 90 Molprozent beträgt, mit Trimethylolpropan beschrieben (vgl. US-Patentschrift 3121701). Die danach erhaltene Masse eignet sich zur Herstellung eines wasserlöslichen Films.

Ferner ist bekannt, dass handelsüblicher PVAL mit einem Acetatgruppen-Gehalt von 0 bis 85 Gewichtsprozent als Grundlage eines Schmelzklebstoffs geeignet ist, der ausserdem noch Polyvinylacetat und Weichmacher enthält; als Einkomponenten-Klebmittel soll ein Polyvinylalkohol anwendbar sein, dessen 4gewichtsprozentige wässerige Lösung bei einer Temperatur von 20°C eine Viskosität von 1,3 bis 7 cP aufweist und der noch 10 bis 80 Gewichtsprozent Vinylacetat-Gruppen enthält (vgl. US-Patentschrift 3296018).

Die Verseifung von Vinylacetat-Crotonsäure-Mischpolymerisaten in Anwesenheit eines Alkoholüberschusses und einer solchen Menge Base, die zur praktisch vollständigen Neutralisation der freien Carboxylgruppen und zur Katalysierung der Alkoholyse der Acetylgruppen im Mischpolymerisat mindestens ausreicht, ist aus der DE-AS 1229729 bekannt. Die resultierenden Vinylalkoholmischpolymerisate dienen zur Herstellung von kaltwasserlöslichen, heisssiegelfähigen Verpackungsfolien, über deren Schmelzbarkeitseigenschaften nichts beschrieben ist.

Aufgabe der Erfindung ist die Herstellung eines Klebstoffs auf Basis von Polyvinylalkohol, der gut schmelzbar und wasserlöslich ist und Filme mit befriedigender Kohäsion bildet.

Die Erfindung betrifft nun ein Verfahren zur Herstellung eines Schmelzklebstoffs auf Basis von Polyvinylalkohol durch Alkoholyse eines Vinylester-Polymers in Gegenwart eines basischen Katalysators und ist dadurch gekennzeichnet, dass man ein Vinylester-Copolymer, dessen Molekulargewicht (Gewichtsmittel) im Bereich von 60000 bis 400000 liegt – gegebenenfalls im Gemisch mit einem Vinylester-Homopolymer, dessen Molekulargewicht (Gewichtsmittel) im Bereich von 30000 bis 200000 liegt –, der Alkoholyse mit einem niederen Alkohol unterwirft, so dass ein Polyvinylalkohol mit einem durchschnittlichen Hydrolysegrad von 50 bis 70 Molprozent resultiert.

Als Ausgangsmaterial wird ein Vinylester-Copolymer verwendet, dessen Molekulargewicht im Bereich von 60000 bis 400000, vorzugsweise von 80000 bis 200000, liegt (Gewichtsmittel, ermittelt nach der Lichtstreuungsmethode mit Quecksilberdampflicht). Ein geeignetes Ausgangsmaterial ist ein Copolymer aus Vinylacetat und einer Verbindung der Formel (1)

$$CH_2=\underset{\displaystyle R^1}{\underset{|}{C}}-R^2,$$

in der $R^1$ ein Wasserstoffatom oder einen Methylrest bedeutet und $R^2$ (a) einen Alkylcarboxyrest mit 3 bis 18, vorzugsweise 3 bis 12, Kohlenstoffatomen, (b) einen Alkoxyrest mit 1 bis 4 Kohlenstoffatomen, (c) eine Nitrilgruppe, (d) ein Wasserstoffatom oder einen Kohlenwasserstoffrest mit 1 bis 8 Kohlenstoffatomen oder (e) einen Vinylrest darstellt.

Als Beispiele für olefinisch ungesättigte Verbindungen der Formel (1) seien genannt

(a) Vinylester von aliphatischen Carbonsäuren mit 3 bis 18, vorzugsweise 3 bis 12 Kohlenstoffatomen, z.B. Vinylpropionat, Vinylbutyrat, Vinylpivalat, Vinylisononat, Vinyllaurat und Vinyldecanate sowie Vinylester eines Gemisches von Monocarbonsäuren mit 9 bis 11 Kohlenstoffatomen,

(b) Vinylalkylether, z.B. Vinylmethylether, Vinylethylether und Vinyl-n-butylether,

(c) Acrylnitril und Methacrylnitril,

(d) Olefine wie Ethylen, Styrol und α-Methylstyrol, und

(e) Butadien und Isopren.

Besonders geeignet ist ein Copolymer aus Vinylacetat und einer olefinisch ungesättigten Mono- oder Dicarbonsäure mit 2, 3 oder 4 Kohlenstoffatomen oder einem Amid oder einem Ester einer solchen Säure, z.B. Acrylsäure, [illegible]thacrylsäure und insbesondere Crotonsäure [illegible]ie auch Maleinsäure und Fumarsäure, ferner [illegible]lsäureamid, Methacrylsäureamid, Crotonsäur[illegible]nid und Maleinsäure-di-n-butylester.

Das Comonomer wird ein einer Menge von 0,5 bis 2, vorzugsweise 1 bis 1,5 Gewichtsprozent eingesetzt.

Das Vinylester-Copolymer wird gegebenenfalls im Gemisch mit einem Vinylester-Homopolymer eingesetzt, dessen Molekulargewicht (Gewichtsmittel, ermittelt nach der Lichtstreuungsmethode mit Quecksilberdampflicht) im Bereich von 30000 bis 200000, vorzugsweise von 35000 bis 100000, liegt. Das Homopolymer ist vorzugsweise ein Polyvinylacetat; geeignet sind aber auch die Homopolymeren der oben unter (a) genannten Vinylester.

Die Alkoholyse des Vinylester-Polymers oder gegebenenfalls der Vinylester-Polymeren wird mit Hilfe eines niederen aliphatischen Alkohols durchgeführt, der vorzugsweise 1, 2 oder 3 Kohlenstoffatome aufweist. Besonders geeignet ist Methanol. Das Vinylester-Polymer oder die Vinylester-Polymeren werden dabei in gelöster Form verseift. Vorteilhaft ist eine Polymer-Konzentration von 30 bis 80, vorzugsweise 60 bis 75 Gewichtsprozent. Die Alkoholyse, vorzugsweise Methanolyse, erfolgt in Gegenwart eines basischen Katalysators. Als Katalysator wird insbesondere ein Alkalialkoholat oder

ein Alkalihydroxid eingesetzt, z.B. Natriummethylat, Kaliummethylat, Natriumethylat, Kaliumethylat sowie Natriumhydroxid und Kaliumhydroxid. Der Katalysator wird in einer Menge von 0,3 bis 2 Gewichtsprozent, vorzugsweise 0,5 bis 1,5 Gewichtsprozent, verwendet (bezogen auf Vinylester-Polymer). Es ist empfehlenswert, den Katalysator in gelöster Form anzuwenden, wobei als Lösemittel vorzugsweise derselbe Alkohol dient, der als Lösemittel für das Vinylester-Polymer oder die Vinylester-Polymeren eingesetzt wird. Vorzugsweise wird der Alkohol hier im Gemisch mit Wasser verwendet, wobei das Gewichtsverhältnis 1:1 bis 3:1 beträgt. Die Alkoholyse wird normalerweise bei einer Temperatur von 20 bis 40°C, vorzugsweise von 25 bis 35°C durchgeführt. Nach Beendigung der Reaktion wird das Lösemittel aus dem Reaktionsgemisch entfernt, vorzugsweise durch Verdampfen bei einer Temperatur von 80 bis 100°C und gegebenenfalls bei vermindertem Druck.

Das nach der Entfernung des Lösemittels erhaltene Produkt ist ein wasserlösliches Harz mit einem durchschnittlichen Hydrolysegrad von 50 bis 70, vorzugsweise 53 bis 63 Molprozent. Der Schmelzpunkt des Harzes liegt im Bereich von 120 bis 160°C.

Der Schmelzindex des Harzes beträgt 2 bis 40, vorzugsweise 4 bis 30 g/10 min (gemessen bei einer Temperatur von 90°C unter einer Last von 2,16 kg). Die Viskosität der 4gewichtsprozentigen wässrigen Lösung des Harzes beträgt 1 bis 4, vorzugsweise 1,5 bis 2,5 mPa·s (gemessen bei einer Temperatur von 23°C).

Das erfindungsgemäss erhaltene Harz eignet sich als wiederanfeuchtbarer Schmelzklebstoff, insbesondere zur Herstellung von Klebschichten auf Klebebändern, Briefumschlägen, Briefmarken und Etiketten.

Ein Zusatz von Weichmachern oder anderen Mitteln, die die Schmelzbarkeit oder Viskosität beeinflussen, ist dabei nicht erforderlich. Das Harz bildet auf dem Substrat einen nicht blockenden Film mit guter Kohäsion und guter Benetzbarkeit, der mit Hilfe von Wasser oder Wasserdampf aktiviert werden kann.

Die folgenden Beispiele dienen zur näheren Erläuterung der Erfindung. Prozent- und Verhältnisangaben beziehen sich auf das Gewicht, wenn nicht anders angegeben.

*Beispiel 1:*

In einem Rührgefäss wurden 69 g eines Copolymers aus Vinylacetat und Crotonsäure (95/5), das ein Molekulargewicht von 100 000 aufwies, und 280 g eines Vinylacetat-Homopolymers mit einem Molekulargewicht von 35 000 unter leichtem Rühren bei einer Temperatur von 25°C in 150 g Methanol gelöst. Zu der erhaltenen Lösung wurden unter Rühren 17 g einer 15prozentigen Natronlauge (Wasser/Methanol im Verhältnis 1:2) portionsweise zugefügt, und das Gemisch wurde bis zur vollständigen Homogenisierung weitergerührt. Danach wurden Methanol und Wasser durch Erhitzen des Gemischs auf eine Temperatur von 100°C verdampft.

Das erhaltene wasserlösliche Harz hatte einen Schmelzbereich von 130 bis 150°C, einen Hydrolysegrad von 55 Molprozent und einen Schmelzindex von 11 g/10 min. Die Viskosität der 4prozentigen wässrigen Lösung des Harzes betrug 1,9 mPa·s.

*Beispiel 2:*

Beispiel 1 wurde wiederholt, wobei nun 80 g des Copolymers und 268 g des Homopolymers eingesetzt wurden.

Das erhaltene wasserlösliche Harz hatte einen Schmelzbereich von 120 bis 140°C, einen Hydrolysegrad von 58 Molprozent und einen Schmelzindex von 18 g/10 min. Die Viskosität der 4prozentigen wässerigen Lösung des Harzes betrug 1,95 mPa·s.

*Beispiel 3:*

Beispiel 1 wurde wiederholt, wobei nun 76 g des Copolymers, 280 g des Homopolymers und 18 g der Natronlauge eingesetzt wurden.

Das erhaltene wasserlösliche Harz hatte einen Schmelzbereich von 130 bis 145°C, einen Hydrolysegrad von 60 Molprozent und einen Schmelzindex von 6 g/10 min. Die Viskosität der 4prozentigen wässerigen Lösung des Harzes betrug 1,98 mPa·s.

*Beispiel 4:*

Beispiel 1 wurde wiederholt, wobei nun 345 g eines Copolymers aus Vinylacetat und Crotonsäure (98,6/1,4) mit einem Molekulargewicht von 60 000 und 18 g der Natronlauge eingesetzt wurden.

Das erhaltene wasserlösliche Harz hatte einen Schmelzbereich von 120 bis 140°C, einen Hydrolysegrad von 60 Molprozent und einen Schmelzindex von 4 g/10 min. Die Viskosität der 4prozentigen wässerigen Lösung des Harzes betrug 2,1 mPa·s.

*Anwendungsbeispiel 1:*

Eine Probe des nach Beispiel 1 erhaltenen Harzes wurde bei einer Temperatur von 150°C geschmolzen und mit Hilfe einer Rakel auf Natronkraftpapier aufgetragen. Die so erhaltene Klebschicht hatte eine Dicke von 0,06 mm und bildete nach dem Erkalten einen transparenten, elastischen und blockfreien Film.

Aus dem beschichteten Papier wurden Probestreifen (2,5 cm × 50 cm) geschnitten, und die Klebschicht wurde mit Wasser benetzt. Sofort danach wurden gleichgrosse Kartonstreifen (Neocart) mit einem Druck von 2 bar auf die befeuchtete Klebschicht der Probestreifen gedrückt. Sofort anschliessend wurde die Abbindegeschwindigkeit mit Hilfe einer Monarch-Tack-Tester (Hersteller: Thwing-Albert Instrument Company, Philadelphia, USA) gemessen, d.h. die Mindestzeit zur Erzielung einer Verklebung, die unter den Prüfbedingungen nicht mehr trennbar war. Die Abbindegeschwindigkeit betrug 10 s (Mittelwert aus 20 Messungen).

*Anwendungsbeispiel 2:*

Anwendungsbeispiel 1 wurde wiederholt mit dem nach Beispiel 2 erhaltenen Harz, das bei einer Temperatur von 160°C geschmolzen wurde.

. Die Abbindegeschwindigkeit betrug 15 s (Mittelwert aus 20 Messungen).

**Patentansprüche** für die Vertragsstaaten BE, CH, DE, FR, GB, IT, LI, LU, NL, SE

1. Verfahren zur Herstellung eines Schmelzklebstoffs auf Basis von Polyvinylalkohol durch Alkoholyse eines Vinylester-Polymers in Gegenwart eines basischen Katalysators, dadurch gekennzeichnet, dass man ein Vinylester-Copolymer, dessen Molekulargewicht im Bereich von 60 000 bis 400 000 liegt – gegebenenfalls im Gemisch mit einem Vinylester-Homopolymer, dessen Molekulargewicht im Bereich von 30 000 bis 200 000 liegt –, der Alkoholyse mit einem niederen Alkohol unterwirft, so dass ein Polyvinylalkohol mit einem durchschnittlichen Hydrolysegrad von 50 bis 70 Molprozent resultiert.

2. Verfahren nach Anspruch 1, dadurch gekennzeichnet, dass man als Vinylester-Copolymer ein Copolymer aus Vinylacetat und einer Verbindung der Formel (1)

$$CH_2=\underset{R^1}{\underset{|}{C}}-R^2, \qquad (1)$$

verwendet, in der $R^1$ ein Wasserstoffatom oder einen Methylrest bedeutet und $R^2$ (a) einen Alkylcarboxyrest mit 3 bis 18 Kohlenstoffatomen, (b) einen Alkoxyrest mit 1 bis 4 Kohlenstoffatomen, (c) eine Nitrilgruppe, (d) ein Wasserstoffatom oder einen Kohlenwasserstoffrest mit 1 bis 8 Kohlenstoffatomen oder (e) einen Vinylrest darstellt.

3. Verfahren nach Anspruch 1, dadurch gekennzeichnet, dass man als Vinylester-Copolymer ein Copolymer aus Vinylacetat und einer olefinisch ungesättigten Mono- oder Dicarbonsäure mit 2, 3 oder 4 Kohlenstoffatomen oder einem Amid oder einem Ester einer solchen Säure verwendet.

4. Verfahren nach Anspruch 3, dadurch gekennzeichnet, dass man als Vinylester-Copolymer ein Copolymer aus Vinylacetat und Crotonsäure verwendet.

5. Schmelzklebstoff, hergestellt nach einem Verfahren der Ansprüche 1 bis 4.

6. Schmelzklebstoff nach Anspruch 5, dadurch gekennzeichnet, dass er im Bereich von 120 bis 160°C schmelzbar ist.

7. Schmelzklebstoff nach Anspruch 5, dadurch gekennzeichnet, dass er einen Schmelzindex von 2 bis 40 g/10 min aufweist (gemessen bei einer Temperatur von 90°C unter einer Last von 2,16 kg).

**Patentansprüche** für den Vertragsstaat: AT

1. Verfahren zur Herstellung eines Schmelzklebstoffs auf Basis von Polyvinylalkohol durch Alkoholyse eines Vinylester-Polymers in Gegenwart eines basischen Katalysators, dadurch gekennzeichnet, dass man ein Vinylester-Copolymer, dessen Molekulargewicht im Bereich von 60 000 bis 400 000 liegt – gegebenenfalls im Gemisch mit einem Vinylester-Homopolymer, dessen Molekulargewicht im Bereich von 30 000 bis 200 000 liegt –, der Alkoholyse mit einem niederen Alkohol unterwirft, so dass ein Polyvinylalkohol mit einem durchschnittlichen Hydrolysegrad von 50 bis 70 Molprozent resultiert.

2. Verfahren nach Anspruch 1, dadurch gekennzeichnet, dass man als Vinylester-Copolymer ein Copolymer aus Vinylacetat und einer Verbindung der Formel (1)

$$CH_2=\underset{R^1}{\underset{|}{C}}-R^2, \qquad (1)$$

verwendet, in der $R^1$ ein Wasserstoffatom oder einen Methylrest bedeutet und $R^2$ (a) einen Alkylcarboxyrest mit 3 bis 18 Kohlenstoffatomen, (b) einen Alkoxyrest mit 1 bis 4 Kohlenstoffatomen, (c) eine Nitrilgruppe, (d) ein Wasserstoffatom oder einen Kohlenwasserstoffrest mit 1 bis 8 Kohlenstoffatomen oder (e) einen Vinylrest darstellt.

3. Verfahren nach Anspruch 1, dadurch gekennzeichnet, dass man als Vinylester-Copolymer ein Copolymer aus Vinylacetat und einer olefinisch ungesättigten Mono- oder Dicarbonsäure mit 2, 3 oder 4 Kohlenstoffatomen oder einem Amid oder einem Ester einer solchen Säure verwendet.

4. Verfahren nach Anspruch 3, dadurch gekennzeichnet, dass man als Vinylester-Copolymer ein Copolymer aus Vinylacetat und Crotonsäure verwendet.

**Claims** for the Contracting States BE, CH, DE, FR, GB, IT, LI, LU, NL, SE

1. A process for the preparation of a hot-melt adhesive based on polyvinyl alcohol by alcoholyzing a vinyl ester polymer in the presence of a basic catalyst, which comprises subjecting, to alcoholysis with a lower alcohol, a vinyl ester copolymer which has a molecular weight within the range from 60,000 to 400,000 – if desired in admixture with a vinyl ester homopolymer which has a molecular weight within the range from 30,000 to 200,000 – so that a polyvinyl alcohol results which has an average degree of hydrolysis of 50 to 70 mole per cent.

2. The process as claimed in claim 1, wherein the vinyl ester copolymer used is a copolymer formed from vinyl acetate and a compound of the formula (1)

$$CH_2=\underset{R^1}{\underset{|}{C}}-R^2, \qquad (1)$$

in which $R^1$ denotes a hydrogen atom or a methyl radical and $R^2$ represents (a) an alkylcarboxy radical having 3 to 18 carbon atoms, (b) an alkoxy radical having 1 to 4 carbon atoms, (c) a nitrile group, (d) a hydrogen atom or a hydrocarbon radical having 1 to 8 carbon atoms or (e) a vinyl radical.

3. The process as claimed in claim 1, wherein the vinyl ester copolymer used is a copolymer formed from vinyl acetate and an olefinically unsaturated monocarboxylic or dicarboxylic acid having 2, 3 or 4 carbon atoms, or an amide or an ester of such an acid.

4. The process as claimed in claim 3, wherein the vinyl ester copolymer used is a copolymer formed from vinyl acetate and crotonic acid.

5. A hot-melt adhesive prepared in accordance with a process claimed in claims 1 to 4.

6. A hot-melt adhesive as claimed in claim 5, characterized in that it can be melted within the range from 120 to 160°C.

7. A hot-melt adhesive as claimed in claim 5, characterized in that it has a melt index of 2 to 40 g/10 min (determined at a temperature of 90°C under a load of 2.16 kg).

**Claims** for the Contracting State: AT

1. A process for the preparation of a hot-melt adhesive based on polyvinyl alcohol by alcoholyzing a vinyl ester polymer in the presence of a basic catalyst, which comprises subjecting, to alcoholysis with a lower alcohol, a vinyl ester copolymer which has a molecular weight within the range from 60,000 to 400,000 – if desired in admixture with a vinyl ester homopolymer which has a molecular weight within the range from 30,000 to 200,000 – so that a polyvinyl alcohol results which has an average degree of hydrolysis of 50 to 70 mole per cent.

2. The process as claimed in claim 1, wherein the vinyl ester copolymer used is a copolymer formed from vinyl acetate and a compound of the formula (1)

$$CH_2=\underset{\displaystyle R^1}{\underset{|}{C}}-R^2, \qquad (1)$$

in which $R^1$ denotes a hydrogen atom or a methyl radical and $R^2$ represents (a) an alkylcarboxy radical having 3 to 18 carbon atoms, (b) an alkoxy radical having 1 to 4 carbon atoms, (c) a nitrile group, (d) a hydrogen atom or a hydrocarbon radical having 1 to 8 carbon atoms or (e) a vinyl radical.

3. The process as claimed in claim 1, wherein the vinyl ester copolymer used is a copolymer formed from vinyl acetate and an olefinically unsaturated monocarboxylic or dicarboxylic acid having 2, 3 or 4 carbon atoms, or an amide or an ester of such an acid.

4. The process as claimed in claim 3, wherein the vinyl ester copolymer used is a copolymer formed from vinyl acetate and crotonic acid.

**Revendications** pour les Etats contractants BE, CH, DE, FR, GB, IT, LI, LU, NL, SE

1. Procédé de préparation d'un adhésif thermofusible à base de poly(alcool vinylique) par alcoolyse d'un polymère d'ester de vinyle en présence d'un catalyseur basique, procédé caractérisé en ce qu'on soumet un copolymère d'ester de vinyle, dont le poids moléculaire se situe entre 60 000 et 400 000, éventuellement en mélange avec un homopolymère de l'ester de vinyle dont le poids moléculaire se situe entre 30 000 et 200 000, à une alcoolyse à l'aide d'un alcool inférieur de sorte qu'il en résulte un poly(alcool vinylique) ayant un degré moyen d'hydrolyse de 50 à 70 moles%.

2. Procédé selon la revendication 1, caractérisé en ce qu'on utilise comme copolymère d'ester de vinyle un copolymère de l'acétate de vinyle et d'un composé de formule (1):

$$CH_2=\underset{\displaystyle R^1}{\underset{|}{C}}-R^2, \qquad (1)$$

dans laquelle $R^1$ représente un atome d'hydrogène ou un reste méthyle, et $R^2$ représente (a) un reste carboxyalkyle ayant 3 à 18 atomes de carbone, (b) un reste alcoxy ayant 1 à 4 atomes de carbone, (c) un groupe nitrile, (d) un atome d'hydrogène ou un reste d'hydrocarbure ayant 1 à 8 atomes de carbone, ou (e) un reste vinyle.

3. Procédé selon la revendication 1, caractérisé en ce qu'on utilise comme copolymère d'ester de vinyle un copolymère de l'acétate de vinyle et d'un acide mono- ou dicarboxylique à insaturation oléfinique comportant 2, 3 ou 4 atomes de carbone, ou un amide ou un ester d'un tel acide.

4. Procédé selon la revendication 3, caractérisé en ce qu'on utilise comme copolymère d'ester de vinyle un copolymère de l'acétate de vinyle et de l'acide crotonique.

5. Adhésif thermofusible, préparé par un procédé selon l'une quelconque des revendications 1 à 4.

6. Adhésif thermofusible selon la revendication 5, caractérisé en ce qu'il peut fondre dans un intervalle de température de 120 à 160°C.

7. Adhésif thermofusible selon la revendication 5, caractérisé en ce qu'il présente un indice de fusion de 2 à 40 g/10 min (mesuré à une température de 90°C sous une charge de 2,16 kg).

**Revendications** pour l'Etat contractant: AT

1. Procédé de préparation d'un adhésif thermofusible à base de poly(alcool vinylique) par alcoolyse d'un polymère d'ester de vinyle en présence d'un catalyseur basique, procédé caractérisé en ce qu'on soumet un copolymère d'ester de vinyle, dont le poids moléculaire se situe entre 60 000 et 400 000, éventuellement en mélange avec un homopolymère de l'ester de vinyle dont le poids moléculaire se situe entre 30 000 et 200 000, à une

alcoolyse à l'aide d'un alcool inférieur de sorte qu'il en résulte un poly(alcool vinylique) ayant un degré moyen d'hydrolyse de 50 à 70 moles%.

2. Procédé selon la revendication 1, caractérisé en ce qu'on utilise comme copolymère d'ester de vinyle un copolymère de l'acétate de vinyle et d'un composé de formule (1):

$$CH_2=\underset{\displaystyle R^1}{\underset{|}{C}}-R^2, \qquad (1)$$

dans laquelle $R^1$ représente un atome d'hydrogène ou un reste méthyle, et $R^2$ représente (a) un reste carboxyalkyle ayant 3 à 18 atomes de carbone, (b) un reste alcoxy ayant 1 à 4 atomes de carbone, (c) un groupe nitrile, (d) un atome d'hydrogène ou un reste d'hydrocarbure ayant 1 à 8 atomes de carbone, ou (e) un reste vinyle.

3. Procédé selon la revendication 1, caractérisé en ce qu'on utilise comme copolymère d'ester de vinyle un copolymère de l'acétate de vinyle et d'un acide mono- ou dicarboxylique à insaturation oléfinique comportant 2, 3 ou 4 atomes de carbone, ou un amide ou un ester d'un tel acide.

4. Procédé selon la revendication 3, caractérisé en ce qu'on utilise comme copolymère d'ester de vinyle un copolymère de l'acétate de vinyle et de l'acide crotonique.